# EUROPEAN PATENT SPECIFICATION

(11) **EP 0 878 640 B1**
(45) Date of publication and mention of the grant of the patent: **16.07.2003**
(21) Application number: 98201441.7
(22) Date of filing: 04.05.1998
(51) Int. Cl.: F16G 13/16

(54) **Holder assembly for cable supporting chains**
Halterungsvorrichtung für kabelführende Ketten
Dispositif de soutien pour chaines de support de cables

(30) Priority: 12.05.1997 IT MI971102
(43) Date of publication of application: 18.11.1998
(73) Proprietor: Mauri, Giovanni, I-20052 Monza Milano (IT)
(72) Inventor: Mauri, Giovanni, I-20052 Monza Milano (IT)
(74) Representative: Riccardi, Sergio

(56) References cited:
- EP-A- 0 277 389
- FR-A- 2 023 613

## Description

The present invention relates to an arrangement having the so-called cable-supporting chains and in particular a new holder assembly therefor.

The so-called cable-supporting chains have been known for several years, such chains being provided for holding and carrying flexible conduits and being comprised of mutually articulated links and are used to feed the utilities conduits to apparatus provided with a reciprocal back and forth movement. Chains which can be used for apparatus provided with a rotating movement (in this connection see EP-0277389 granted to the same inventor of the present invention) are also known.

In particular, when such chains with curvilinear path are used it has been noted that in case they are not properly supported, tends to become bent just because of their not negligible own weight. Such a situation happened for example when a first bottom length of the chain laid on a support surface while a second length, the end of which was connected to the apparatus, was not supported and formed a hollow portion or a so called "belly".

The attempt that has been made in the past to solve the above problem has been to support from below the free or unsupported end of the chain by a rotating roller the axis of which is integral with the fixed basement of the (rotating) apparatus to which the utilities conduits lead.

Such an arrangement has partially solved the above problem but the roller has been proved to be awkward, cumbersome and unable to provide a proper restrainment against chain side movements.

Document FR-A-2 023 613 on which the preamble of claim 1 is based, discloses a holder assembly for cable supporting chains consisting of a plurality of links, said chains being provided for feeding utilities conduits to apparatus, said assembly further comprising at least one first member and at least one second member mutually engaging each other, said at least one first member being substantially fixed to the chain or integral therewith while the at least one second member being integral with the apparatus or fixed thereto. However, such an arrangement has no provision for fixing the first member to a bridge of a chain link so as to reduce material and simplify the arrangement.

It is thus an object of the present invention, in view of the above problems, to provide a holder assembly for cable supporting chains which is practical, less cumbersome, easy, effective and restrains any side or radial movement of the chain.

The above object is attained by an arrangement having the features of independent claim 1. Optional features are set forth in the dependent claims.

A detailed description of the invention now follows, to be read with reference to the annexed sheets of illustrative drawings in which the various figures show:
- Figure 1 is a diagrammatic view of the invention as used in connection with a rotating apparatus in which the tooth is engaging the respective seat;
- Figure 2 is a diagrammatic view similar to Figure 1 but in such a case the tooth is still relatively far from its seat;
- Figure 3 partially shows a second embodiment of the pair of mutually connecting members just before their engagement, and
- Figure 4 is similar to Figure 3 but shows the mutually connecting members after their engagement.

Through the various figures, the same reference numbers obviously refer to similar or equivalent parts.

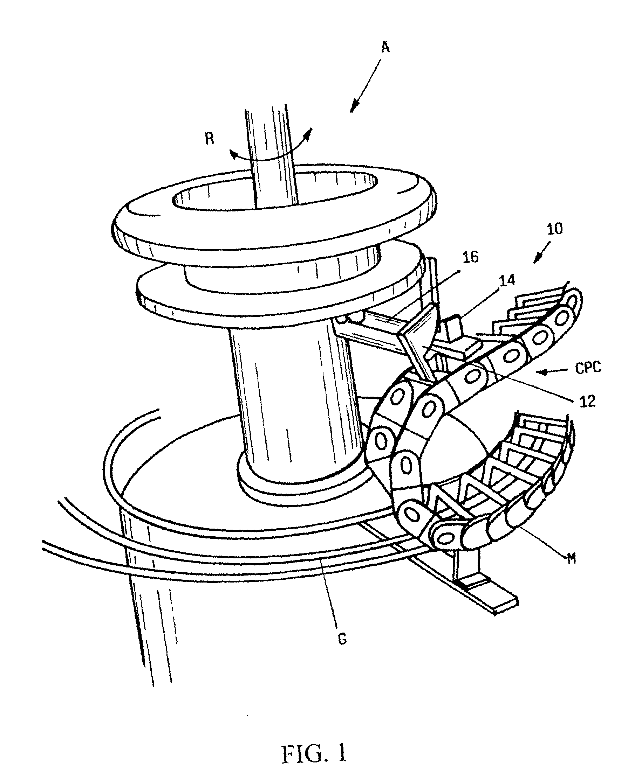

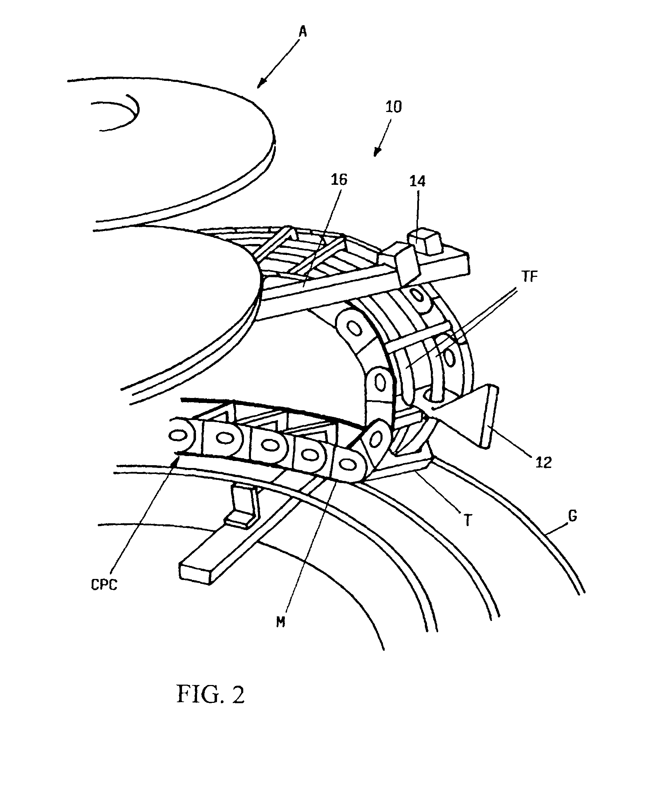

Figures 1 and 2 show in a very simplified manner, an apparatus A that can be rotated in two opposite directions as indicated by the double headed arrow R and which has to be fed for example by particular fluids and/or electric energy flowing through flexible cables or tubes TF. Such a situation represents a typical circumstance in which a cable supporting chain CPC, and in particular a curvilinear path chain, is required. Generally such a chain is supported below by a guide G, in the present case a tubular circular guide, on which the chain CPC or at least a part thereof lies.

As the rotation movement of apparatus A draws the chain and forms a too long unsupported or free upper length, such a length has a tendency to bend, as stated above. The present invention solves such an inconvenience in a practical and effective way by a holder assembly 10 which will be better disclosed hereinbelow with reference to Figures 1-2 and 3-4 which show a first and second embodiments respectively of a plurality of possible embodiments.

The assembly 10 substantially comprises first 12 and second 14 mutually connecting members, that could become mutually engaged at a proper time of the CPC stroke, i e. when the chain is at a precise and designed position. Preferably the first mutual engagement member is a properly shaped member which can be mounted to a link M of the chain CPC while the second engagement member 14 is generally integral with the apparatus A.

For example the first mutual engagement member 12 could be a properly shaped tooth which can be mounted to a bridge of a link M or any part of the link. Of course it could also be integral with the bridge or with any part of the link.

The second mutual engagement member 14 could have the shape of a hollow or slotted part supported by an arm or bracket 16 that is integral with the apparatus A (optionally such a hollow part could also be integral with the arm or bracket 16).

As the chain CPC lays supported on the guide, the first mutual engagement member 12 projects downwardly between the tubular guides G and obviously there is no engagement with the second member 14 but as the rotation movement of the apparatus A drags the chain CPC thus creating a too long unsupported upper length, the members 12 and 14 will mutually engage thus avoiding, in addition to a probable bend of the chain, also a side or radial movement thereof.

According to the particular use, more than a pair of members 12 and 14, for example two or more pairs of such members, could be provided.

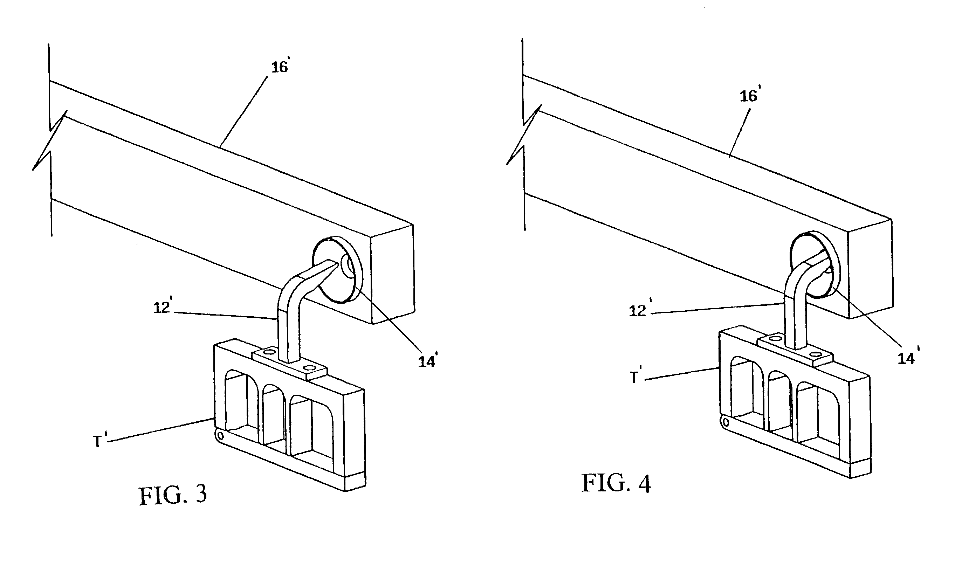

Further, although tile members 12 and 14 have been shown in this particular form, they could have different shapes such as for example those shown in Figures 3 and 4: the second member 14' is a perforated part, preferably provided with a cone-shaped entry while the first member 12' has generally a shape similar to a sharpened hook which is bent at 90° and fixed to a bridge T'.

It is thus apparent that various modifications, adaptations, variations and changes could be resorted to the assembly of the present invention that has been given only as illustrative and not limiting embodiments of the invention without departing from the scope of protection of the appended claims.

## Claims

1. An arrangement comprising:
- a holder assembly (10) for a cable supporting chain (CPC),
- a cable supporting chain (CPC) consisting of a plurality of links (M) and provided for feeding utilities conduits (TF) to an apparatus (A),
- an apparatus (A) suitable for being fed with said utilities conduits (TF), the holder assembly (10) comprising at least one first member (12, 12') and at least one second member (14, 14') mutually engageable and disengageable each other dependent upon relative movement of the chain and the apparatus (A),
- said at least one first member (12, 12') being substantially fixed to the chain (CPC) or integral therewith while the at least one second member (14, 14') being integral with the apparatus (A) or fixed thereto;
**characterized in that** said at least one first mutual engagement member (12, 12') is fixed to a corresponding at least one bridge (T, T') of a link (M) of the chain (CPC) or is integral therewith.

2. The holder assembly (10) according to claim 1 **characterized in that** said at least one first mutual engagement member (12, 12') is a properly shaped tooth or hook.

3. The holder assembly (10) according to any of the preceding claims, **characterized in that** said at least one second mutual engagement member (14, 14') is a hollow, slotted or perforated and properly shaped part.

4. The holder assembly (10) according to any of the preceding claims, **characterized in that** said at least one second mutual engagement member (14, 14') is mounted to or integral with a corresponding bracket or bar (16) protruding toward the chain.

5. The holder assembly (10) according to any of the preceding claims, **characterized in that** said chain has a curvilinear path.

## Patentansprüche

1. Eine Anordnung umfassend
- eine Halterungsvorrichtung (10) für eine kabelführende Kette (CPC),
- eine kabelführende Kette (CPC), die aus einer Mehrzahl von Gliedern (M) besteht und zur Zuführung von Versorgungsleitungen (TF) zu einer Apparatur (A) vorgesehen ist,
- eine Apparatur (A), die geeignet ist, besagte Versorgungsleitungen (TF) zugeführt zu bekommen, wobei die Halterungsvorrichtung (10) wenigstens ein erstes Teil (12, 12') und wenigstens ein zweites Teil (14, 14') umfasst, die gegenseitig zueinander in Anschlag zu bringen und voneinander zu lösen sind, abhängig von einer relativen Bewegung der Kette und der Apparatur (A),
- besagtes wenigstens ein erstes Teil (12, 12'), das im Wesentlichen an der Kette (CPC) befestigt oder mit ihr integral ausgeführt ist, während das wenigstens eine zweite Teil (14, 14') integral mit der Apparatur (A) ausgeführt oder an ihr befestigt ist;
**dadurch gekennzeichnet,**
**dass** besagtes wenigstens ein erstes, als gegenseitiger Anschlag dienendes Teil (12, 12') an einer korrespondierenden, wenigstens einen Brücke (T, T') eines Glieds (M) der Kette (CPC) befestigt oder mit ihr integral ausgeführt ist.

2. Die Halterungsvorrichtung (10) nach Anspruch 1, **dadurch gekennzeichnet, dass** besagtes wenigstens ein erstes, als gegenseitiger Anschlag dienendes Teil (12, 12') ein geeignet geformter Zahn oder Haken ist.

3. Die Halterungsvorrichtung (10) nach einem der vorhergehenden Ansprüche, **dadurch gekennzeichnet, dass** besagtes wenigstens ein zweites, als gegenseitiger Anschlag dienendes Teil (14, 14') ein hohles, geschlitztes oder gelochtes und geeignet geformtes Stück ist.

4. Die Halterungsvorrichtung (10) nach einem der vorhergehenden Ansprüche, **dadurch gekennzeichnet, dass** besagtes wenigstens ein zweites, als gegenseitiger Anschlag dienendes Teil (14, 14') an einem in Richtung der Kette hervorstehenden korrespondierenden Halter oder Stab (16) angebracht oder mit ihm integral ausgeführt ist.

5. Die Halterungsvorrichtung (10) nach einem der vorhergehenden Ansprüche, **dadurch gekennzeichnet, dass** besagte Kette eine krummlinige Bahn hat.

## Revendications

1. Configuration comprenant
- un ensemble de maintien (10) pour une chaîne de maintien de câbles (CPC),
- une chaîne de maintien de câbles (CPC) composée d'une pluralité de maillons (M) et prévue pour acheminer des conduits d'énergie (TF) à un appareil,
- un appareil (A) pouvant être alimenté par lesdits conduits d'énergie (TF), l'ensemble de fixation (10) comprenant en outre au moins un premier membre (12, 12') et au moins un second membre (14, 14') pouvant s'enclencher mutuellement l'un dans l'autre et se déclencher l'un de l'autre, chacun de manière indépendante pendant le mouvement relatif de la chaîne et de l'appareil (A),
- ledit premier membre (12, 12') au moins étant fixé substantiellement à la chaîne (CPC) ou bien étant solidaire de cette dernière, tandis que ledit second membre (14, 14') au moins est solidaire de l'appareil (A) ou fixé à ce dernier;
**caractérisée en ce qu'**un premier membre d'enclenchement mutuel au moins (12, 12') est fixé à au moins un pont (T, T') correspondant d'un maillon (M) de la chaîne (CPC) ou solidaire de ce dernier.

2. Ensemble de fixation (10) selon la revendication 1, **caractérisé en ce qu'**un premier membre d'enclenchement mutuel au moins (12, 12') est une dent ou un crochet de forme appropriée.

3. Ensemble de fixation (10) selon l'une quelconque des revendications précédentes, **caractérisé en ce qu'**un second membre d'enclenchement mutuel au moins (14, 14') est une pièce creuse, fendue ou perforée et de forme appropriée.

4. Ensemble de fixation (10) selon l'une quelconque des revendications précédentes, **caractérisé en ce qu'**un second membre d'enclenchement mutuel au moins (14, 14') est monté sur, ou solidaire de, un étrier correspondant ou une barre correspondante (16) en saillie vers la chaîne.

5. Ensemble de fixation (10) selon l'une quelconque des revendications précédentes, **caractérisé en ce que** ladite chaîne a un circuit curviligne.
